Europäisches Patentamt

European Patent Office

Office européen des brevets

(19)

(11) Veröffentlichungsnummer: **0 109 349**
**B1**

(12) **EUROPÄISCHE PATENTSCHRIFT**

(45) Veröffentlichungstag der Patentschrift:
**17.09.86**

(51) Int. Cl.⁴: **C 02 F 1/46**, A 01 C 3/00

(21) Anmeldenummer: **83710076.7**

(22) Anmeldetag: **26.10.83**

(54) Verfahren zur Behandlung von Flüssigmist.

(30) Priorität: **13.11.82 DE 3242124**

(43) Veröffentlichungstag der Anmeldung:
**23.05.84 Patentblatt 84/21**

(45) Bekanntmachung des Hinweises auf die Patenterteilung:
**17.09.86 Patentblatt 86/38**

(84) Benannte Vertragsstaaten:
**AT CH IT LI**

(56) Entgegenhaltungen:
**FR - A - 2 067 724**
**FR - A - 2 112 286**
**FR - A - 2 412 504**
**GB - A - 622 691**

**Die Akte enthält technische Angaben, die nach dem Eingang der Anmeldung eingereicht wurden und die nicht in dieser Patentschrift enthalten sind.**

(73) Patentinhaber: **Müller, Wolfgang, Prof. Dr., Im Hof 17, D-7435 Hülben (DE)**

(72) Erfinder: **Müller, Wolfgang, Prof. Dr., Im Hof 17, D-7435 Hülben (DE)**

(74) Vertreter: **Hoeger, Stellrecht & Partner, Uhlandstrasse 14c, D-7000 Stuttgart 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Behandlung von Flüssigmist, d.h. von Kot- und Harnausscheidungen von Tieren, die gegebenenfalls mit Wasser oder Einstreu vermischt sind.

Bei der Verarbeitung von Flüssigkeit (Gülle) ergeben sich aus arbeitstechnischen Überlegungen häufig längere Lagerzeiten für den anfallenden Flüssigmist. Auch aufgrund der jahreszeitlich unterschiedlichen Pflanzenproduktion ist eine kontinuierliche Ausbringung des Flüssigmistes nicht möglich, so dass auch dadurch erhebliche Lagerzeiten notwendig werden. Eine Lagerkapazität für anfallenden Flüssigmist gehört zum festen Bestandteil eines Betriebes, der Flüssigmistwirtschaft betreibt.

Bei der Bemessung dieser Lagerkapazität wird nicht nur die durchschnittlich anfallende Flüssigmistmenge pro Tier und Tag zugrundegelegt, sondern es ist notwendig, Zuschläge für die während der Lagerungszeit, die typischerweise einige Wochen beträgt, eintretende Volumenvergrösserung vorzusehen, die durch anaerobe Gärungsvorgänge und sonstige Zersetzungsprozesse auftritt und je nach Jahreszeit zwischen 20 und 30% betragen kann. Es ist also notwendig, wegen dieser immer auftretenden Volumenvergrösserung wesentlich grössere Lagerkapazitäten zur Verfügung zu stellen.

Unerwünscht ist bei der Lagerung von Flüssigmist weiterhin die durch den Flüssigmist auftretende Geruchsbelästigung, die so stark sein kann, dass eine Ansiedlung von Flüssigmistwirtschaft treibenden Betrieben in der Nähe von Wohnsiedlungen unmöglich wird.

Der Erfindung liegt die Aufgabe zugrunde, ein Verfahren zur Behandlung von Flüssigmist anzugeben, mit dem die unerwünschte Volumenvergrösserung des Flüssigmistes bei längerer Lagerung verhindert werden kann.

Diese Aufgabe wird bei einem Verfahren der eingangs beschriebenen Art erfindungsgemäss dadurch gelöst, dass man mindestens eine Kupferelektrode und eine Gegenelektrode in dem Flüssigmist anordnet und durch Anlegen einer Gleichspannung, die vorzugsweise unterhalb der Gasungsspannung des Flüssigmiestes liegt, aus der als Anode geschalteten Kupferelektrode Kupferionen in den Flüssigmist einbringt, und dass man die Stromdichte zwischen etwa 1 mA/m$^2$ Elektrodenfläche und etwa 1 A/m$^2$ Elektrodenfläche wählt.

Es hat sich überraschenderweise herausgestellt, dass durch dieses elektrolytische Einbringen von Kupferionen in den Flüssigmist die unerwünschte Volumenvergrösserung auch bei langandauernder Lagerung praktisch vollständig unterbleibt. Es ist weiterhin überraschend, dass bei der erfindungsgemässen Behandlung auch die störende Geruchsbildung des Flüssigmistes wesentlich herabgesetzt werden kann und insbesondere bei der Verwendung von Rindermist sogar im wesentlichen verhindert wird. Schliesslich ist es mit Hilfe des erfindungsgemässen Verfahrens auch möglich, gezielt bestimmte Krankheitserreger im Flüssigkist zu vernichten, beispielsweise Salmonellen oder Kolibakterien. Es wird dadurch möglich, den Flüssigmist früher auszubringen, als es bei bisher bekannten Verfahren möglich war, bei dem man den Flüssigmist monatelang lagern musste, um die bei einer Lagerung über lange Zeiträume hinweg von selbst eintretende Vernichtung dieser Krankheitserreger abzuwarten.

Nur der Vollständigkeit halber sei darauf hingewiesen, dass zwar bereits ein Verfahren zur Entkeimung von Trinkwasser bekannt ist, bei dem Silberionen elektrolytisch in das Wasser eingebracht werden (DE-C-695322), jedoch kann dieses bekannte, lediglich für die Trinwasseraufbereitung bekannte Verfahren keine Anregung dafür geben, dass durch das Einbringen von Kupferionen in Flüssigmist dessen Volumenvergrösserung vermieden werden kann.

Es ist auch bereits bekannt, menschliche Ausscheidungen dadurch aseptisch zu machen, dass man die menschlichen Fäkalien in einem Behälter zwischen Elektroden mit einer Stromdichte in der Grössenordnung zwischen 45 und 140 A/m$^2$ behandelt. Dabei steht die Erzeugung von Sauerstoff im Vordergrund, der in kurzer Zeit eine Desinfektion der Fäkalien erreicht (GB-A 622691). Im Gegensatz zu diesem bekannten Verfahren wird bei der Verwendung der niedrigeren Stromdichten, die gemäss der vorliegenden Erfindung eingesetzt werden sollen, der Effekt der Desinfektion durch Zersetzung der Flüssigkeit kaum auftreten. Der wesentliche Effekt ergibt sich vielmehr durch das Einbringen von Kupferionen in den Flüssigmist.

Besonders günstig ist es, wenn man die Stromdichte zwischen etwa 50 mA/m$^2$ Elektrodenfläche und 200 mA/m$^2$ Elektrodenfläche wählt.

Vorteilhaft ist es, wenn man beide Elektroden aus Kupfer wählt und die Spannung nach einem Zeitraum umpolt, der grösser ist als die Wanderungsdauer der Kupferionen zwischen den beiden Elektronen. Auf diese Weise kann man die Abnutzung der Elektroden herabsetzen, da die beiden Elektroden wechselseitig als Kathode und als Anode geschaltet werden, so dass sie sich zwar in einem Zyklus abtragen, im darauffolgenden sich aber durch die Anlagerung von Kupferionen wieder regenerieren.

Das Verfahren wird vorzugsweise so geführt, dass man eine Konzentration der zudosierten Kupferionen im Flüssigmist zwischen 100 und 500 Mikrogramm pro Liter Flüssigmist aufrechterhält.

Bei einer Weiterbildung des erfindungsgemässen Verfahrens ist vorgesehen, dass man zur Entfernung der Kupferionen vor dem Ende der Behandlung die als Anode geschaltete Kupferelektrode durch eine Inertelektrode (Kohleelektrode) ersetzt und die Behandlung während eines längeren Zeitraums (1 bis 5 Tage) fortsetzt.

Dabei kann man zur Entfernung der Kupferionen und zur Entfernung von Schwermetallionen Stromdichten in der Grössenordnung von 1 A/m$^2$ Elektrodenfläche wählen. Günstig ist es dabei weiterhin, wenn man den flüssigen Mist zur Entfernung der Kupferionen oder der Schwermetallionen zwischen zwei einen Abstand von 15–20 cm aufweisenden Elektroden im Kreis hindurchführt.

Vorzugsweise wird zwischen den Elektroden eine Gleichspannung angelegt, die unterhalb der Gasungsspannung des Füssigmistes liegt. Wenn die Elektroden jedoch einen grösseren Abstand voneinander haben, wird der Widerstand des Flüssigmistes zwischen den Elektroden so gross, dass der zwischen den Elektroden fliessende Strom bei dieser Spannung zu klein wäre. In diesen Fällen kann die Spannung auch über die Gasungsspannung erhöht werden. Dabei wird im Elektrodenbereich Sauerstoff entwickelt, der desinfizierende Wirkung hat. Diese desinfizierende Wirkung beschränkt sich aber auf den Elektrodenbereich, die erfindungsgemässe Wirkung der Kupferionen tritt jedoch im gesamten Volumen des Flüssigmistes auf, da durch den Strom die Kupferionen im gesamten Volumen des Flüssigmistes verteilt werden. Die Wirkung der Kupferionen ist in keiner Weise mit der Wirkung des Sauerstoffes im Elektrodenbereich zu vergleichen.

Die nachfolgende Beschreibung bevorzugter Ausführungsformen der Erfindung dient im Zusammenhang mit der Zeichnung der näheren Erläuterung. Es zeigen:

Fig. 1 eine schematische Längsschnittansicht durch einen Flüssigmistbehälter mit zwei darin eintauchenden Kupferelektroden;

Fig. 2 eine Draufsicht auf einen kreiszylindrischen Flüssigmistbehälter mit einer Randelektrode und einer Mittelelektrode;

Fig. 3 eine Ansicht ähnlich Fig. 1 mit einer abgewandelten Elektrodenanordnung;

Fig. 4 eine schematische Ansicht eines Flüssigmistbehälters mit Umwälzeinrichtung und elektrolytischer Behandlung in der Umwälzeinrichtung, und

Fig. 5 eine Ansicht ähnlich Fig. 1 mit zwei Hauptelektroden und mehreren Nebenelektroden.

Unter Flüssigmist (Gülle) versteht man in der Regel eine Mischung aus festen und flüssigen Tierausscheidungen, wie sie in landwirtschaftlichen Betrieben anfällt und zu Düngezwecken verwendet wird. Beispielsweise kann ein Flüssigmist aus Kot und Urin im Verhältnis 10:1 bestehen.

Im Rahmen der vorliegenden Erfindung wird dieser Flüssigmist dadurch behandelt, dass auf elektrolytischem Wege Kupferionen in ihn eingebracht werden. Diese Behandlung setzt vorteilhafterweise unmittelbar nach dem Anfall des Mistes ein und dauert üblicherweise während der gesamten Lagerzeit, wobei es vorteilhaft ist, die in den Flüssigmist eingebrachten Kupferionen vor dem Abschluss der Behandlung und vor dem Anbringen des Flüssigmistes wieder aus dem Flüssigmist zu entfernen.

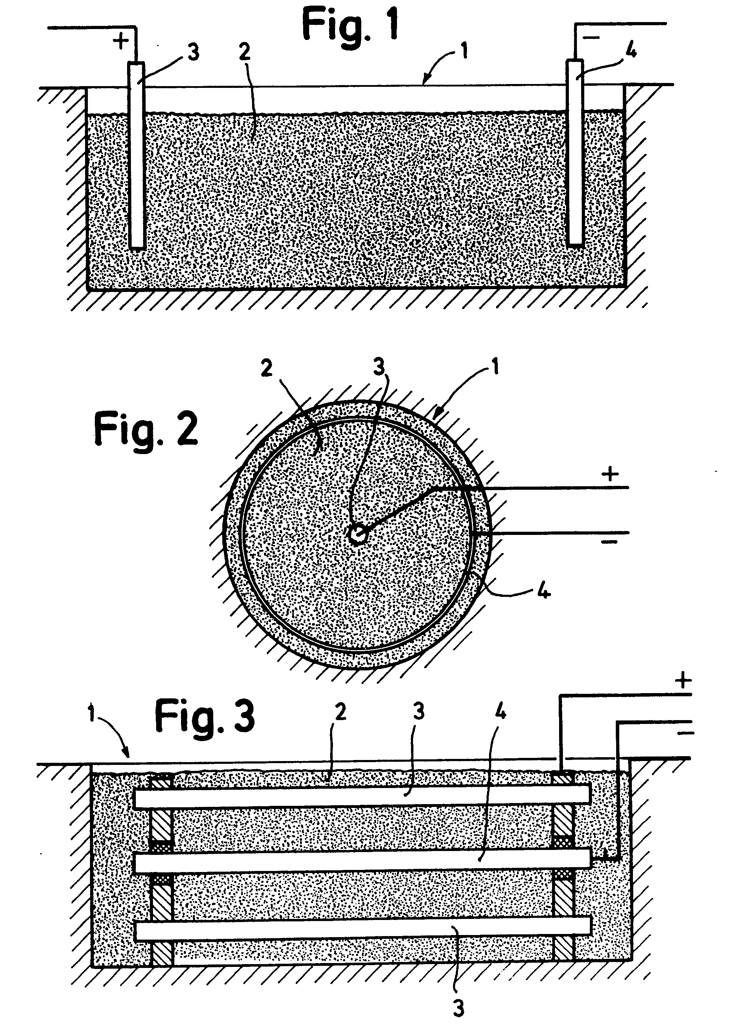

Diese Behandlung kann im einfachsten Fall in einem Behälter 1 erfolgen, wie er in Fig. 1 dargestellt ist. Dieser Behälter 1, in der Regel ein grösserer Lagertank, nimmt den Flüssigmist 2 auf. An beiden Wänden des Behälters 1 tauchen Elektroden 3 und 4 in den Behälter ein, die mit den beiden Polen einer Gleichspannungs-Konstantstromquelle verbunden sind.

Zumindest die als Anode geschaltete Elektrode besteht aus Kupfer, die andere Elektrode kann aus einem beliebigen Material bestehen, in bestimmten und näher erläuterten Fällen ist es günstig, auch diese Elektroden in Kupfer auszuführen.

Das Behandlungsverfahren wird so geführt, dass zwischen den beiden Elektroden ein Strom fliesst, wobei die Stromdichte zwischen 1 mA und 1 A/m² der Kupferelektrodenfläche liegen kann, vorzugsweise in der Grössenordnung von 100 mA/m² Elektrodenfläche. Dabei bleibt die zwischen den Elektroden angelegte Spannung unter der Gasungsspannung des Flüssigmistes, wenn der Elektrodenabstand das zulässt, andernfalls wird sie geringfügig über diesen Betrag erhöht.

Bei länger andauernder Behandlung stellt sich eine Gleichgewichtskonzentration an Kupferionen im Flüssigmist ein, die mindestens ein der Grössenordnung von 200 bis 300 Mikrogramm pro Liter des Flüssigmistes liegen soll.

Günstig ist eine Ausgestaltung, bei der beide Elektroden aus Kupfer bestehen. In diesem Fall können die Elektroden zur Erhöhung von deren Standzeit von Zeit zu Zeit umgepolt werden, so dass an einer Elektrode immer abwechselnd eine Abgabe von Kupferionen und eine Anlagerung von metallischem Kupfer erfolgt. Die Zeiträume, nach denen die Umpolung erfolgt, sollten gröser sein als die Wanderungsdauer der Kupferionen von einer Elektrode zur anderen. Dabei kann von einer Wanderungsgeschwindigkeit der Kupferionen im Flüssigmist in der Grössenordnung von 0,002 cm/sek ausgegangen werden.

Vor der Verwendung des Flüssigmistes können die in diesem enthaltenen Kupferionen dadurch aus dem Flüssigmist entfernt werden, dass die Kupferanode durch eine Inertanode ersetzt wird, beispielsweise eine Kohlenanode. Wenn man das Verfahren dann in der normalen Weise weiterführt, werden die Kupferionen an der Gegenelektrode gesammelt und damit aus dem Flüssigmist entfernt. Es ist dabei vorteilhaft, wenn für diesen Zweck eine höhere Stromdichte gewählt wird als bei dem Einbringen der Kupferionen in den Flüssigmist, beispielsweise eine Stromdichte in der Grössenordnung von 1 A/m² Elektrodenfläche.

Mit diesem Verfahren werden im übrigen nicht nur Kupferionen aus dem Flüssigmist entfernt, sondern auch Schwermetallionen. Dieses Verfahren stellt daher eine Möglichkeit der Entfernung von Schwermetallionen aus Flüssigmist dar und kann grundsätzlich auch bei anderen Substanzen als bei Flüssigmist Anwendung finden, beispielsweise bei Klärschlamm usw.

Das erfindungsgemässe Verfahren kann mit beliebigen Elektrodenanordnungen in dem Flüssigmistaufnahmebehälter durchgeführt werden, beispielsweise ist eine Anordnung möglich, wie sie sich aus der Darstellung der Fig. 2 ergibt. Der Aufnahmebehälter für den Flüssigmist hat dabei im wesentlichen eine kreiszylindrische Form, wobei die eine Elektrode 4 als längs der Wand verlaufende Ringelektrode und die andere als stabförmige Mittelelektrode ausgebildet ist.

Bei dem in Fig. 3 dargestellten Behälter befindet sich eine horizontal verlaufende, in der Mitte des Behälters angeordnete Elektrode 4 zwischen zwei parallelen Elektroden 4, die in der Nähe des Bodens bzw. in der Nähe der Oberfläche des Behälters angeordnet sind und die elektrisch leitend miteinander verbunden sind.

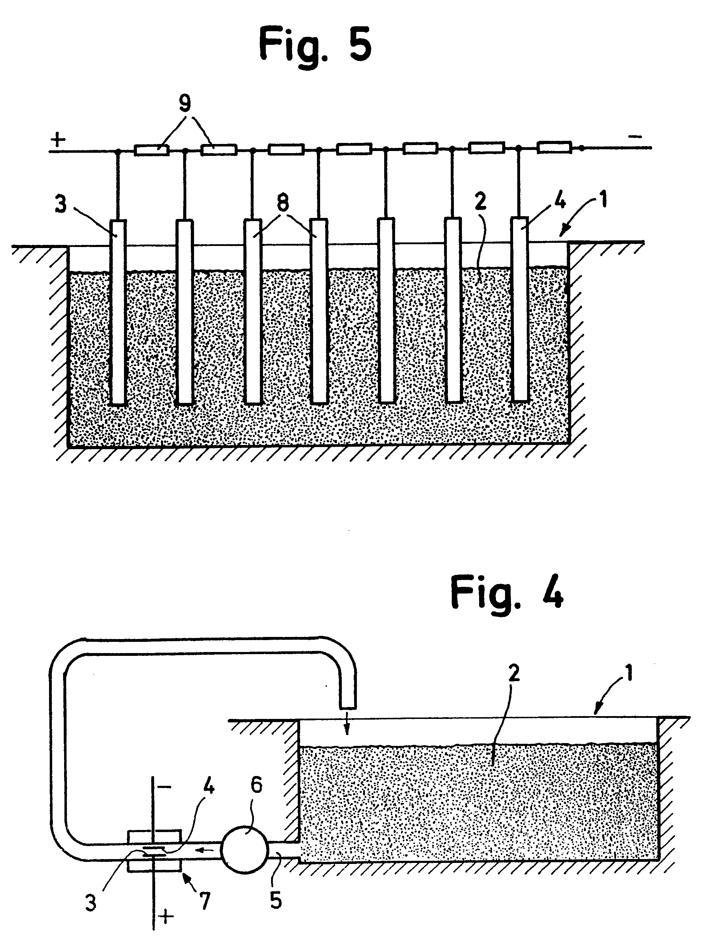

Es ist auch möglich, die Behandlungsanordnung ausserhalb des eigentlichen Lagerbehälters anzuordnen und den Flüssigmist aus dem Behälter in die Behandlungsvorrichtung und von dieser wieder zurück in den Behälter zu führen. Eine solche Anordnung ist in Fig. 4 dargestellt. Dabei führt eine Leitung 5 über eine Umwälzpumpe 6 aus dem Behälter 1 in einen Behandlungsraum 7, in dem die beiden Elektroden 3 und 4 angeordnet sind, und von dort wieder zurück in den Behälter 1. Diese Anordnung ist besonders geeignet für die Entfernung der Kupferionen aus dem Flüssigmist oder für die Entfernung von Schwermetallionen aus Flüssigmist, Klärschlamm usw. Es ist dabei vorteilhaft, wenn der Abstand der beiden Elektroden 3 und 4 relativ gering ist, beispielsweise in der Grössenordnung von 20 cm.

Selbstverständlich kann auch eine solche Anordnung zum Einbringen von Kupferionen in Flüssigmist verwendet werden.

Bei der in Fig. 5 dargestellten Anordnung sind neben Hauptelektroden 3 und 4 an den Wänden des Behälters zwischen diesen mehrere Hilfselektroden 8 vorgesehen, die im wesentlichen äquidistant angeordnet sind. Alle Elektroden bestehen bei dieser Anordnung aus Kupfer. Die beiden Hauptelektroden 3 und 4 sind mit den Polen der Spannungsquelle verbunden, jeweils benachbarte Elektroden sind untereinander über einen Widerstand 9 miteinander elektrisch verbunden. Dabei werden die Widerstände so gross gewählt, dass sie etwa 10 bis 20 mal so gross sind wie der Ohmsche Widerstand zwischen benachbarten Elektroden im Flüssigmist. Auf diese Weise werden die Hilfselektroden gegenüber den Elektroden auf einer Seite als Anode und gegenüber den Elektroden auf der anderen Seite als Kathode wirken. Durch die Anordnung einer grösseren Anzahl von Hilfselektroden zwischen den Hauptelektroden erhält man eine Homogenisierung der Kupferionenbehandlung des Flüssigmistes auch in grossen Behältern, ausserdem wird die Zeitdauer der Wanderung der Ionen von einer Elektrode zur benachbarten Elektrode herabgesetzt, so dass die Umpolung zur Erhöhung der Standzeiten der Elektroden häufiger stattfinden kann.

Wie bereits erwähnt, ist die Verhinderung der Volumenvergrösserung am wirksamsten, wenn die erfindungsgemässe Behandlung unmittelbar nach Anfall des Flüssigmistes beginnt. Es ist dabei günstig, wenn bereits in dem dem Stall zugeordneten Sammelbehälter Elektroden der beschriebenen Art angeordnet sind, solche Elektroden können dann auch in den Kanälen vorgesehen sein, die den Frischmist aus diesen Sammelbehältern in die normalerweise entfernt angeordneten Lagerbehälter transportieren, und selbstverständlich werden Behandlungsanordnungen der beschriebenen Art in diesen Lagerbehältern selbst vorgesehen werden. Die Anordnung in den Transportleitungen kann beispielsweise ähnlich ausgebildet sein wie die Anordnung der Fig. 4, d.h. es können in den Kanälen quer zur Strömungsrichtung einander gegenüberliegende Elektroden vorgesehen sein, zwischen denen der Flüssigmist hindurchfliesst.

Das beschriebene Behandlungsverfahren führt zu mehreren erwünschten Effekten, nämlich der Herabsetzung oder Vermeidung der Volumenvergrösserung des Flüssigmistes, der Herabsetzung oder Beseitigung des unangenehmen Eigengeruches des Frischmistes und der Beseitigung spezieller Krankheitserreger im Frischmist. Diese drei sehr unterschiedlichen Wirkungen werden in gleicher Weise durch das elektrolytische Einbringen von Kupferionen in den Flüssigmist hervorgerufen, wobei die Wirkung wahrscheinlich auf der Inaktivierung von Enzymen beruht. Es ist dabei weiterhin zu vermuten, dass durch das beschriebene Verfahren ein verzögerter Stickstoffabbau im Flüssigmist bewirkt wird, der die Düngewirkung beim Ausbringen auf die landwirtschaftliche Nutzfläche erhöhen dürfte.

Anhand von Vergleichsversuchen wird im folgenden nachgewiesen, welche überraschenden Resultate die erfindungsgemässe Behandlung von Flüssigkeitsmist ergibt:

Volumenverminderung:

In jeweils 2 Standzylindern mit je 1000 ml Fassungsvermögen wurden bei einer Umgebungstemperatur von 281 ± 2K frischer Rinderflüssigmist (Rinderkot und Rinderurin im Verhältnis 10:1) bis zur Markierung 500 ml eingefüllt. Es wurden insgesamt 7 Parallelversuchsreihen angelegt, die Standzylinder wurden mit Aluminiumfolie abgedeckt.

Ein Standzylinder blieb als Kontrolle unbehandelt. Ein Standzylinder jeder Parallelversuchsreihe blieb als Kontrolle unbehandelt, im anderen befand sich am Boden eine Kupferplatte als Elektrode (Kathode), die Anode tauchte ca. 1 cm von oben zentral in den Flüssigmist ein. Der Abstand der Elektroden betrug 20 cm, der Widerstand des Elektrolyten zwischen den Elektroden lag zwischen 0,5 und 0,6 Ohm. Der Strom wurde mittels einer Konstantstromquelle auf 1 mA eingeregelt.

Eine Zusammenfassung der Ergebnisse zeigen die Tabellen 1, 1A, 2 und 2A. Bei einer Behandlungstemperatur von 281 K ist bei den im Sinne des erfindungsgemässen Verfahrens behandelten Proben keine Volumenvergrösserung festzustellen, das Volumen geht sogar noch etwas unter das Anfangsvolumen zurück, wobei dieser Rückgang aber vermutlich auf eine Austrocknung zurückzuführen ist.

Die unbehandelte Probe hingegen erhöht ihr Volumen im Mittel von anfänglich 500 ml auf 600,86 ml. Das entspricht einer Erhöhung um 20,17%. Dabei ist diese Volumenerhöhung schon nach zehn Tagen sichtbar. Ähnliche Ergebnisse erhält man bei einer Lagertemperatur von 293 K, hier zeigen die unbehandelten Proben schon nach sieben Tagen eine Volumenzunahme von ca. 28%, während bei dem gemäss den beschriebenen Verfahren behandelten Proben keine Volumenerhöhung sichtbar wird.

Vergleichbare Ergebnisse wurden auch mit Schweineflüssigmist erzielt. Bei vier Parallelversuchen zeigten die behandelten Proben keine Volumenerhöhung, dagegen kam es bei den unbehandelten Proben zu einer mindestens 18%igen Erhöhung des Volumens.

Tabelle 1

Ermittlung der Volumenveränderungen von behandelter (b.) und unbehandelter (unb.) Frischgülle (Tierart Rind) bei einer Temperatur von 281 ± 1 K Ausgangsvolumina 500 ml

| Zeit (Tage) | Versuch Nr. 1 | | 2 | | 3 | | 4 | | 5 | | 6 | | 7 | |
| | b. | unb. | b. | unb. | b. | unb. | b. | unb. | b. | unb. | b. | unb. | b. | unb. |
|---|---|---|---|---|---|---|---|---|---|---|---|---|---|---|
| 1 | 500 | 502 | 500 | 501 | 500 | 501 | 500 | 502 | 500 | 500 | 500 | 500 | 500 | 501 |
| 10 | 501 | 602 | 500 | 601 | 499 | 602 | 501 | 599 | 502 | 598 | 500 | 598 | 500 | 601 |
| 14 | 500 | 602 | 499 | 601 | 498 | 603 | 500 | 605 | 498 | 606 | 498 | 604 | 497 | 600 |
| 21 | 498 | 600 | 496 | 599 | 495 | 600 | 498 | 601 | 496 | 604 | 497 | 600 | 497 | 602 |

Tabelle 1A:

Mittelwerte und Standardabweichungen der Versuche aus Tabelle 1

| Zeit (Tage) | behandelt (x/s) | unbehandelt (x/s) |
|---|---|---|
| 1 | 500,0 /0,0 | 501,0 /0,82 |
| 10 | 500,43/0,98 | 600,14/1,77 |
| 14 | 498,57/1,13 | 603,00/2,16 |
| 21 | 496,71/1,11 | 600,86/1,68 |

Tabelle 2:

Ermittlung der Volumenveränderungen von behandelter (b.) und unbehandelter (unb.) Frischgülle (Tierart Rind) bei einer Temperatur von 293±2 K Ausgangsvolumina 500 ml

| Zeit (Tage) | Versuch Nr. 1 | | 2 | | 3 | |
| | b. | unb. | b. | unb. | b. | unb. |
|---|---|---|---|---|---|---|
| 1 | 500 | 506 | 500 | 510 | 500 | 512 |
| 7 | 498 | 645 | 496 | 651 | 497 | 658 |
| 14 | 495 | 635 | 494 | 648 | 495 | 651 |

Tabelle 2A:

Mittelwerte und Standardabweichungen der Versuche aus Tabelle 2

| Zeit (Tage) | behandelt (x/s) | unbehandelt (x/s) |
|---|---|---|
| 1 | 500,0 /0,0 | 509,33/3,06 |
| 7 | 497,0 /1,0 | 651,33/6,51 |
| 14 | 494,67/0,58 | 644,67/8,50 |

Eigengeruchsverminderung:

Zwei Behälter mit jeweils einem Liter frischem Rinderkot wurden mit 10% Rinderurin versetzt (Frischgülle).

In den ersten Behälter tauchten zwei Kupferelektroden (Fläche 2 cm²). Mittels einer Konstantstromquelle, die an die Elektroden angeschlossen wurde, wurde der fliessende Strom auf 1 mA begrenzt. Der zweite Behälter wurde unbehandelt belassen und diente als Kontrolle. Die Umgebungstemperatur betrug 289 K.

Nach einer Behandlungsdauer von 5 Tagen hatte der Flüssigmist im ersten Behälter einen Geruch nach Gras und Erde, während die unbehandelte Probe noch wie am Versuchsanfang den tierartlich eigenen Geruch nach Exkrementen besass. Dieser war zu Beginn der Behandlung ebenfalls in der behandelten Probe vorhanden, liess aber im Laufe der Behandlung in der beschriebenen Weise nach und verschwand zum Versuchsende nahezu vollständig.

Dieser Versuch wurde in vier Parallelreihen in vier verschiedenen Räumen und mit vier verschiedenen Flüssigmistproben wiederholt. Unterschiede ergaben sich nur in der Zeit, nach der die Probe den typischen Geruch nach Exkrementen verloren hatte.

Nach maximal zehn Tagen Behandlungsdauer war bei allen behandelten Proben – auch nach Durchrühren des Flüssigmistes – nur noch ein erdiger, an Gras erinnernder Geruch zu bemerken, während die unbehandelten Proben, besonders nach dem Aufrühren, stechenden Eigenschaften zeigten.

Bei ebenfalls untersuchtem Schweinemist zeigte sich die Geruchsreduktion nicht in dem bei Rindermist beobachteten Masse. Nach zwei Tagen Behandlungsdauer ging der anfänglich vorhandene starke Eigengeruch jedoch in einen säuerlichen Geruch über, der bis zum Versuchsende nach 21 Tagen bestehen blieb. Die unbehandelte Probe zeigte so gut wie keine Reduktion des penetranten Eigengeruches.

Für die Auswertung der Versuche wurden mindestens vier Versuchspersonen (Geruchsproben) herangezogen.

Vernichtung von Krankheitserregern:

Es ist bekannt, dass beispielsweise Salmonellen in Rindermist bis zu einem Jahr überleben können, in Schweinemist bis zu drei Monaten. Im Gegenatz zur Kompostierung kommt es bei der anaeroben Lagerung von Flüssigmist zu keiner Erhitzung, die für den relativ schnellen Entseuchungseffekt verantwortlich ist. Die Lagerung des Mistes geschieht in den meisten Fällen in Erdbehältern, die über das ganze Jahr hinweg Temperaturen zwischen 281 und 285 K gewährleisten. Diese neidrigen Temperaturen führen unter anderem zu der schon erwähnten langen Lebensdauer von Krankheitserregern in Flüssigmist.

Will man dennoch bestimmte Krankheitserreger in vertretbarer Zeit aus dem Flüssigmist eliminieren, sei es um gesetzlichen Vorschriften im Seuchenfalle zu genügen, sei es um eine Verschleppung der Krankheitserreger in die Umwelt zu verhindern, so bieten sich derzeit nur chemische Desinfektionsverfahren und Belüftungsverfahren an. Die chemischen Verfahren (Chlorkalk, Chloramin, Natronlauge, Formaldehyd) führen zu einer mehr oder weniger starken Veränderung des Flüssigmistes, so dass in extremen Fällen dieser sogar für Düngezwecke unbrauchbar wird.

Die Belüftungsverfahren benötigen hohe Energiemengen, wobei nur bei wenigen Verfahren Abtötung von pathogenen Keimen in angemessener Zeit beobachtet wird.

Es ist bemerkenswert, dass bei der erfindungsgemässen Behandlung eine selektive Abtötung von pathogenen Keimen auftritt (beispielsweise von Salmonellen oder Kolibakterien), während die Gesamtkoloniezahl über den Behandlungszeitraum von einer Woche nahezu konstant blieb, wie sich aus der nachstehenden Tabelle 3 ergibt.

Tabelle 3:
Gesamtkoloniezahl von behandelter und unbehandelter Rindergülle (Koloniezahl/g) Mittel aus vier Versuchen

| Tage | 1 | 4 | 5 | 7 |
|---|---|---|---|---|
| Behandelte Probe | $1,17 \cdot 10^7$ | $5,3 \cdot 10^6$ | $1,8 \cdot 10^7$ | $1,0 \cdot 10^7$ |
| Unbehandelte Probe | $5,2 \cdot 10^6$ | $4,0 \cdot 10^6$ | $1,24 \cdot 10^7$ | $1,6 \cdot 10^7$ |

Versetzt man dagegen behandelten und unbehandelten Flüssigmist mit einer Bouillonkultur (100 ml), die $10^8$ Keime/ml enthält, so ist in der unbehandelten Probe eine Anzüchtung von Salmonellen noch bis zum vierzehnten Tag möglich, während in dem behandelten Substrat die Wiederanzüchtung schon nach 28 Stunden nicht mehr möglich ist. Dieses Ergebnis ist in der nachfolgenden Tabelle 4 noch einmal zusammengefasst.

Tabelle 4:
Isolierung von S. typhimurium aus behandeltem und unbehandeltem Material (experimentelle Keimeinsaat von 100 ml Bouillonkultur/Liter Gülle)

| Tage | 1 | 2 | 4 | 7 | 14 |
|---|---|---|---|---|---|
| Behandelte Probe | + | – | – | – | – |
| Unbehandelte Probe | + | + | + | + | + |

+ = Anzüchtung möglich
– = Salmonellen abgetötet

**Patentansprüche**

1. Verfahren zur Behandlung von Flüssigmist (Kot- und Harnausscheidungen von Tieren), dadurch gekennzeichnet, dass man mindestens eine Kupferelektrode und eine Gegenelektrode in dem Flüssigmist anordnet und durch Anlegen einer Gleichspannung, die vorzugsweise unterhalb der Gasungsspannung des Flüssigmistes liegt, aus der als Anode geschalteten Kupferelektrode Kupferionen in den Flüssigmist einbringt, und dass man die Stromdichte zwischen etwa 1 mA/m² Elektrodenfläche und etwa 1 A/m² Elektrodenfläche wählt.

2. Verfahren nach Anspruch 1, dadurch gekennzeichnet, dass man die Stromdichte zwischen etwa 50 mA/m² Elektrodenfläche und 200 mA/m² Elektrodenfläche wählt.

3. Verfahren nach Anspruch 1 oder 2, dadurch gekennzeichnet, dass man beide Elektroden aus Kupfer wählt und die Spannung nach einem Zeitraum umpolt, der grösser ist als die Wanderungsdauer der Kupferionen zwischen den beiden Elektroden.

4. Verfahren nach einem der voranstehenden Ansprüche, dadurch gekennzeichnet, dass man eine Konzentration der zudosierten Kupferionen im Flüssigmist zwischen 100 und 500 Mikrogramm pro Liter Flüssigmist aufrechterhält.

5. Verfahren nach einem der voranstehenden Ansprüche, dadurch gekennzeichnet, dass man zur Entfernung der Kupferionen vor dem Ende der Behandlung die als Anode geschaltete Kupferelektrode durch eine Inertelektrode (Kohleelektrode) ersetzt und die Behandlung während eines längeren Zeitraumes (1 bis 5 Tage) fortsetzt.

6. Verfahren nach Anspruch 5, dadurch gekennzeichnet, dass man zur Entfernung der Kupferionen und zur Entfernung von übrigen Schwermetallionen Stromdichten in der Grössenordnung von 1 A/m² Elektrodenfläche wählt.

7. Verfahren nach Anspruch 6, dadurch gekennzeichnet, dass man den Flüssigmist zur Entfernung der Kupferionen oder der Schwermetallionen zwischen zwei einen Abstand von 15–20 cm aufweisenden Elektroden im Kreis hindurchführt.

**Claims**

1. A method for the treatment of liquid manure (fecal and urine excretions of animals), characterized in that at least one copper electrode and one counter-electrode are placed in the liquid manure and copper ions from the copper electrode connected as the anode are introduced into the liquid manure by the application of a DC voltage preferably below the gassing voltage of the liquid manure, and that the current density is selected to be between approximately 1 mA/m$^2$ of electrode area and approximately 1 A/m$^2$ of electrode area.

2. Method as defined in claim 1, characterized in that the current density is selected to be between approximately 50 mA/m$^2$ of electrode area and 200 mA/m$^2$ of electrode area.

3. Method as defined in claims 1 or 2, characterized in that both electrodes are made of copper and the voltage is reversed after a period of time greater than the time of migration of the copper ions between the two electrodes.

4. Method as defined in any of the preceding claims, characterized in that a concentration of the copper ions added to the liquid manure is maintained at 100 to 500 micrograms per liter of liquid manure.

5. Method as defined in any of the preceding claims, characterized in that the copper electrode connected as the anode is replaced by an inert electrode (carbon electrode) prior to the end of the treatment to remove the copper ions, and the treatment is continued for an extended period of time (1 to 5 days).

6. Method as defined in claim 5, characterized in that current densities in the order of magnitude of 1 A/m$^2$ of electrode area are selected for the removal of copper ions and for the removal of other heavy metal ions.

7. Method as defined in claim 6, characterized in that the liquid manure is circulated between two electrodes separated by 15–20 cm to remove the copper ions or the heavy metal ions.

**Revendications**

.1 Procédé pour le traitement de fumier liquide (dépôts de crottes et d'urine d'animaux), caractérisé en ce que l'on dispose dans le fumier liquide au moins une électrode de cuivre et une contre-électrode et, par application d'une tension continue qui est de préférence inférieure à la tension de gazéification du fumier liquide, on introduit dans le fumier liquide des ions de cuivre à partir de l'électrode de cuivre branchée en anode et en ce que l'on choisit la densité de courant entre environ 1 mA/m$^2$ de surface et d'électrode et environ 1 Am$^2$ de surface d'électrode.

2. Procédé selon la revendication 1, caractérisé en ce que l'on choisit la densité de courant entre environ 50 mA/m$^2$ de surface d'électrode et 200 mA/m$^2$ de surface d'électrode.

3. Procédé selon la revendication 1 ou 2, caractérisé en ce que l'on choisit les deux électrodes en cuivre et l'on inverse la tension après une durée qui est supérieure à la durée de migration des ions de cuivre entre les deux électrodes.

4. Procédé selon l'une des revendications précédentes, caractérisé en ce que l'on ajuste une concentration des ions de cuivre ajoutés au fumier liquide comprise entre 100 et 500 microgrammes par litre de fumier liquide.

5. Procédé selon l'une des revendications précédentes, caractérisé en ce que, pour l'élimination des ions de cuivre, on remplace avant la fin du traitement l'électrode de cuivre branchée en anode par une électrode inerte (électrode de charbon) et on poursuit le traitement pendant une durée plus longue (1 à 5 jours).

6. Procédé selon la revendication 5, caractérisé en ce que, pour l'élimination des ions de cuivre et pour l'élimination des autres ions de métaux lourds, on choisit des densités de courant de l'ordre de grandeur de 1 A/m$^2$ de surface d'électrode.

7. Procédé selon la revendication 6, caractérisé en ce que, pour l'élimination des ions de cuivre ou des ions de métaux lourds, on fait circuler le fumier liquide entre deux électrodes présentant une distance de 15–20 cm.

0109349

# Fig. 1

# Fig. 2

# Fig. 3

## Fig. 5

## Fig. 4